# EUROPEAN PATENT APPLICATION

(11) **EP 2 369 603 A2**
(43) Date of publication of application: **28.09.2011**
(21) Application number: 11157961.1
(22) Date of filing: 11.03.2011
(51) Int. Cl.: H01G 9/20

(54) **Dye-sensitized solar cell**

(30) Priority: 24.03.2010 KR 20100026402
(71) Applicant: Samsung SDI Co., Ltd., Yongin-si, Gyeonggi-do (KR)
(72) Inventor: Yang, Nam-Choul, Gyeonggi-do (KR)
(74) Representative: Walaski, Jan Filip

(57) **Abstract**

A dye-sensitized solar cell including one or more photoelectric cells for performing photoelectric transformation; a first substrate and a second substrate, the first and second substrates facing each other; an electrolyte between the first substrate and the second substrate; an inner sealing member between the first substrate and the second substrate to define the one or more photoelectric cells and to seal the electrolyte within the one or more photoelectric cells; an outer sealing member a distance apart from the inner sealing member and surrounding the inner sealing member; and a fluid filled between the inner sealing member and the outer sealing member.

## Description

The present invention relates to a dye-sensitized solar cell, and more particularly, to a dye-sensitized solar cell in which leakage of an electrolyte from photoelectric cells is prevented (or blocked).

Recently, various photoelectric elements for converting light energy to electrical energy (e.g., solar cells for converting sunlight to electrical energy) that may replace fossil fuels as an energy source have been researched.

From the solar cells (solar batteries) with various operation principles, wafer-type silicon or crystalline solar batteries using p-n junctions of semiconductors are the most popular but require high manufacturing costs to form and process high purity semiconductor materials.

Unlike a conventional solar cell, a dye-sensitized solar cell includes a photosensitive dye, which receives incident light with a wavelength of visible rays and generates excited electrons therefrom, a semiconductor material for receiving the excited electrons, and an electrolyte, which reacts with electrons returning from an external circuit. Here, the dye-sensitized solar cell exhibits significantly higher photoelectric transformation/conversion efficiency as compared to solar cells in the related art. Therefore, a dye-sensitized solar cell is expected to become a next-generation solar cell.

An aspect of an embodiment of the present invention is directed toward a dye-sensitized solar cell employing a fluid and a double sealing structure to prevent (or protect from) leakage of an electrolyte in the dye-sensitized solar cell.

Additional aspects will be set forth in part in the description which follows and, in part, will be apparent from the description, or may be learned by practice of the presented embodiments.

According to one or more embodiments of the present invention, a dye-sensitized solar cell includes: a photoelectric cell for performing photoelectric transformation; a first substrate and a second substrate, the first and second substrates facing each other; an electrolyte between the first substrate and the second substrate; an inner sealing member between the first substrate and the second substrate to define the photoelectric cell and to seal the electrolyte within the photoelectric cell; an outer sealing member a distance apart from the inner sealing member and surrounding the inner sealing member; and a fluid filled between the inner sealing member and the outer sealing member.

In one embodiment, the fluid is for applying pressure to the inner sealing member, and the applied pressure is greater than the internal pressure of the inner sealing member.

In one embodiment, the fluid includes a gas.

In one embodiment, the fluid includes a liquid. Here, the fluid may have material concentration identical to that of the electrolyte.

In one embodiment, the fluid includes a silicone oil.

In one embodiment, the fluid includes an electrolyte.

In one embodiment, the fluid includes an electrolyte solvent.

In one embodiment, the outer sealing member and the inner sealing member are separated by identical distance in all directions.

In one embodiment, the inner sealing member has a space for housing the photoelectric cell.

In one embodiment, the photoelectric cell includes: a plurality of the photoelectric cells, and the plurality of photoelectric cells are arranged to extend along a direction parallel to each other.

In one embodiment, the photoelectric cell includes: a first electrode and a second electrode respectively on the first substrate and the second substrate; and a semiconductor layer on the first electrode, the electrolyte being between the semiconductor layer and the second electrode.

According to one or more embodiments of the present invention, a dye-sensitized solar cell includes: a first substrate; a second substrate facing the first substrate; a first electrode on the first substrate; a second electrode on the second substrate and facing the first electrode; a semiconductor layer on the first electrode; an electrolyte between the semiconductor layer and the second electrode; an inner sealing member between the first substrate and the second substrate to seal the electrolyte within a space defined by the sealing member; an outer sealing member a distance apart from the inner sealing member and surrounding the inner sealing member; and a fluid between the inner sealing member and the outer sealing member.

The accompanying drawings, together with the specification, illustrate exemplary embodiments of the present invention, and, together with the description, serve to explain the principles of the present invention.
FIG. 1 is a plan view showing a structure of a dye-sensitized solar cell according to an embodiment of the present invention;
FIG. 2 is a plan view showing structures of an inner sealing member and an outer sealing member shown in FIG. 1;
FIG. 3 is a sectional view obtained along a line III-III' of FIG. 1;
FIG. 4 is a perspective view showing arrangements of the inner sealing member and the outer sealing member; and
FIG. 5 is an exploded perspective view of the structure shown in FIG. 4.

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those of ordinary skill in the art. The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that although the terms first and second are used herein to describe various elements, these elements should not be limited by these terms. These terms are only used to distinguish one element from another element.

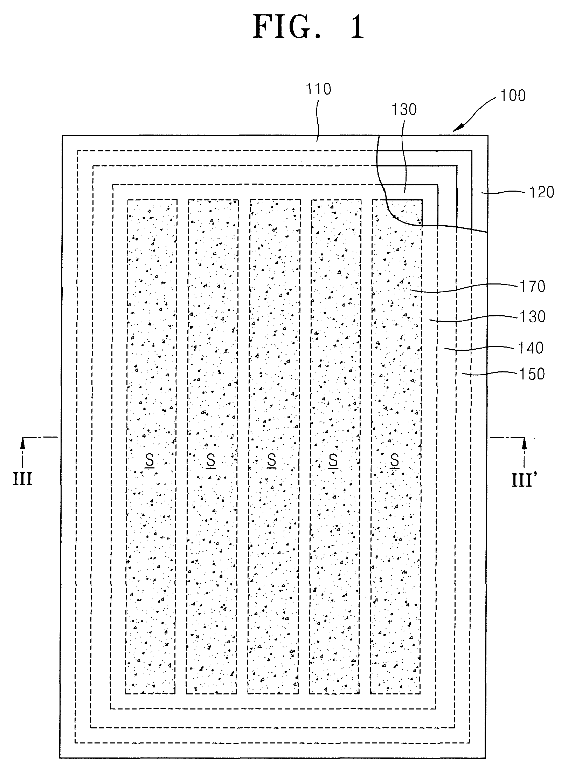

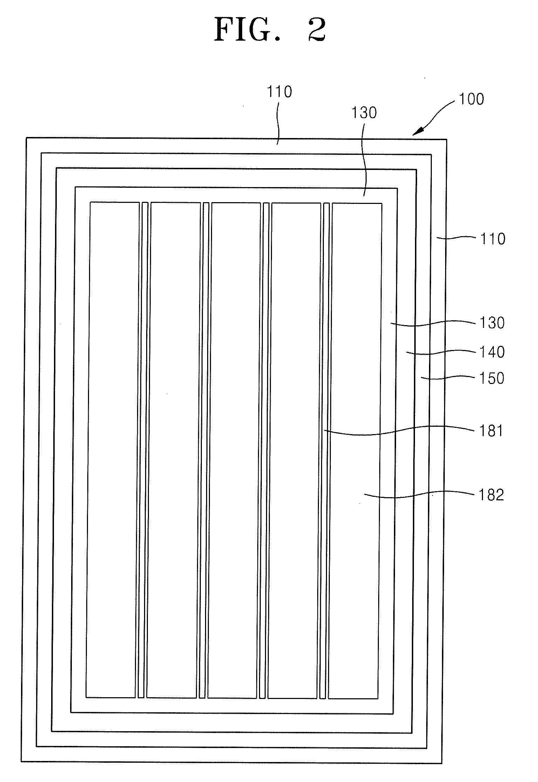

FIG. 1 is a plan view showing the structure of a dye-sensitized solar cell 100 according to an embodiment of the present invention, and FIG. 2 is a plan view showing the structures of an inner sealing member 130 and an outer sealing member 150.

The dye-sensitized solar cell 100 includes one or more photoelectric cells S, and, in the case where a plurality of photoelectric cells S are included, the plurality of photoelectric cells S are defined by using the inner sealing member 130. The plurality of photoelectric cells S may be arranged to be parallel to each other in a certain direction. The plurality of photoelectric cells S are connected to each other in series or in parallel via connection members. The plurality of photoelectric cells S are physically supported between a first substrate 110 and a second substrate 120.

Each of the plurality of photoelectric cells S is filled with an electrolyte 170. The electrolyte 170 is sealed by the inner sealing member 130, which completely surrounds each of the plurality of photoelectric cells S and is arranged between adjacent photoelectric cells (S). In other words, the inner sealing member 130 is arranged to surround the electrolyte 170 to prevent (or block) the electrolyte 170 from leaking out.

Also, the inner sealing member 130 includes at least one space 182 for housing one or more photoelectric cells S. In the case where there are a plurality of photoelectric cells S, the plurality of photoelectric cells S are defined by the inner sealing member 130. The reference numeral 181 indicates housing spaces for housing connection members 180 to be described below with reference to FIG. 2.

The outer sealing member 150 is arranged outside of the area enclosed or defined by the inner sealing member 130 and is configured to be a set or predetermined distance apart from the inner sealing member 130. The outer sealing member 150 acts as a secondary seal for the electrolyte 170 filled in the inner sealing member 130 and secures spaces to be filled with a fluid 140.

The spaces formed between the outer sealing member 150 and the inner sealing member 130 are filled with the fluid 140. The fluid 140 is employed to prevent or block the electrolyte 170, which is sealed by the inner sealing member 130, from leaking out. The fluid 140 may be a gas and/or a liquid. In the case where a gas is used as the fluid 140, any of various gases may be used. According to an embodiment of the present invention, air may be used as the gas constituting the fluid 140 in consideration of manufacturing costs of the dye-sensitized solar cell 100.

In the case where a liquid is used as the fluid 140, the electrolyte 140 may be prevented from leaking by reducing the gradient of material concentrations inside and outside of the inner sealing member 130. Examples of the liquid may include a silicone oil, an electrolyte, an electrolyte solvent, or the like.

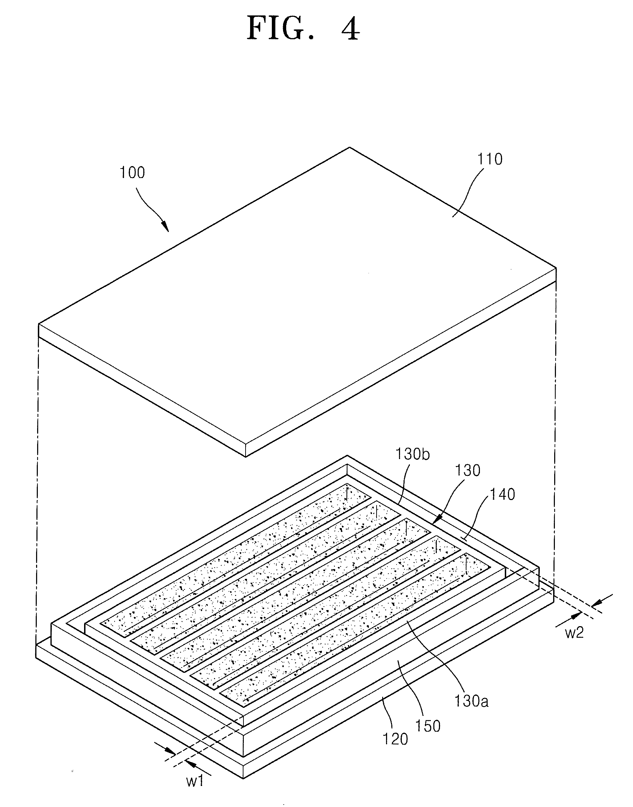

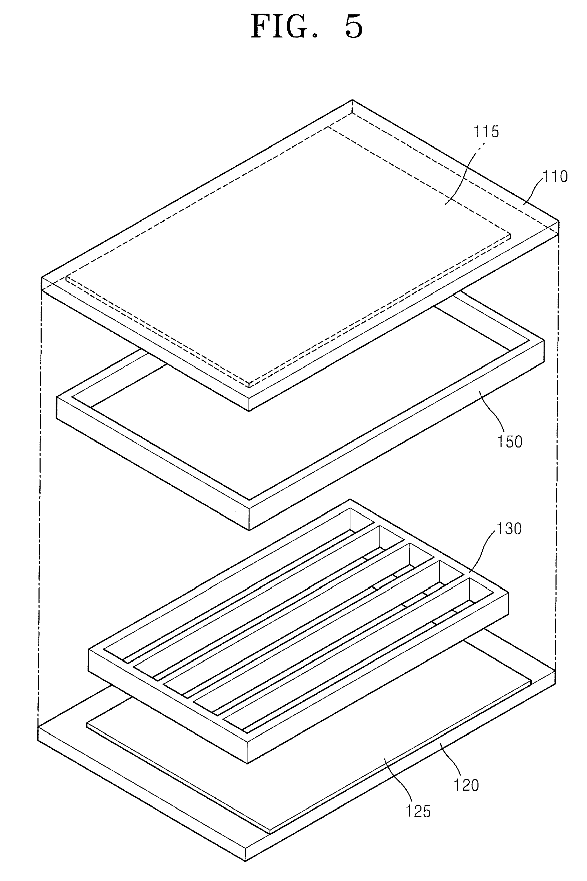

Arrangement of the outer sealing member 150 and the liquid 140 formed as the outer sealing member 150 is arranged will be described below in more detail with reference to FIGS. 4 and 5.

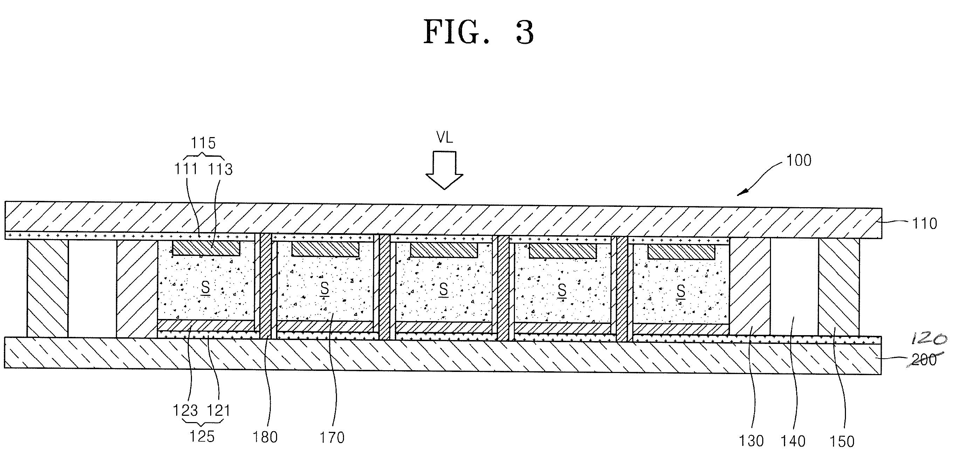

FIG. 3 is a sectional view obtained along a line III-III' of FIG. 1. Referring to FIG. 3, the dye-sensitized solar cell 100 includes the first substrate 110 and the second substrate 120, which are arranged to face each other, and the inner sealing member 130 and the outer sealing member 150, which are arranged between the first and second substrates 110 and 120. Furthermore, the dye-sensitized solar cell 100 includes the one or more photoelectric cells S, which is(are) defined by the inner sealing member 130, and the fluid 140, which fills spaces between the inner sealing member 130 and the outer sealing member 150. Functional layers 115 and 125 for performing photoelectric transformation are formed on the first and second substrates 110 and 120, respectively. The functional layer 115 of the first substrate 110 includes a photo-electrode 111 and a semiconductor layer 113, whereas the functional layer 125 of the second substrate 120 includes a counter electrode 121 and a catalyst layer 123.

The first substrate 110 and the second substrate 120 may be formed to have rectangular shapes. The first substrate 110 is disposed in the upper portion of the dye-sensitized solar cell 100, whereas the second substrate 120 is disposed in the lower portion of the dye-sensitized solar cell 100.

The first substrate 110 is a light-receiving substrate, and may be formed of a material with high light transparency. For example, the first substrate 110 may be formed of a glass substrate and/or a resin film. Since the resin film is flexible, the first substrate 110 may be formed of the resin film in the case where flexibility is a necessary or desired characteristic of the first substrate 110.

The second substrate 120 is a counter substrate and is arranged to face the first substrate 110, which is a light-receiving substrate. Although it is not necessary for the counter substrate to be transparent, the second substrate 120 may be formed of a transparent material, so that light VL may be received from opposite directions for improved photoelectric transformation efficiency. In one embodiment, the second substrate 120 is formed of the same material as the first substrate 110. For example, in the case where the dye-sensitized solar cell 100 is used as a building integrated photovoltaic (BIPV), installed in structures (e.g. a window frame), both the first substrate 110 and the second substrate 120 may be formed of a transparent material so as to not substantially block the light VL that enters from outside.

The first substrate 110 and the second substrate 120 are bonded together, interposing a set or predetermined space (gap) therebetween, in which the inner sealing member 130 and the outer sealing member 150 may be arranged. The photo-electrode 111 and the counter electrode 121 are formed on the first substrate 110 and the second substrate 120, respectively. The semiconductor layer 113 that absorbs a photosensitive dye to be excited by light VL is formed on the photo-electrode 111, and the electrolyte 170 is interposed between the semiconductor layer 113 and the counter electrode 121.

The photo-electrode 111 functions as the negative electrode of the dye-sensitized solar cell 100, and receives electrons generated from photoelectric transformation, and provides a current path. Light VL incident via the photo-electrode 111 excites the photosensitive dye absorbed by the semiconductor layer 113. The photo-electrode 111 may be formed of a transparent conducting oxide (TCO) having electric conductivity and light transparency, such as ITO, FTO, ATO, or the like. The photo-electrode 111 may further contain a metal electrode formed of a metal with high electric conductivity, such as gold (Au), silver (Ag), aluminum (Al), or the like. Such a metal electrode is employed to reduce electric resistance of the photo-electrode 111, and may be arranged in a stripe pattern or a mesh pattern.

The semiconductor layer 113 may be formed of a semiconductor material that is suitable for use in the dye-sensitized solar cell 100. Alternatively, the semiconductor layer 113 may be formed of a metal oxide, where the metal oxide may contain Cd, Zn, In, Pb, Mo, W, Sb, Ti, Ag, Mn, Sn, Zr, Sr, Ga, Si, Cr, or the like. A photosensitive dye may be attached to the semiconductor layer 113 for improved photoelectric transformation efficiency. The semiconductor layer 113 may be formed by coating a paste, in which semiconductor particles having diameters of about 5 nm to about 1000 nm are dispersed, on the first substrate 110, on which photo-electrode 111 is formed, and applying a set or predetermined heat and/or pressure thereto.

The photosensitive dye absorbed by the semiconductor layer 113 absorbs light VL which is transmitted through the first substrate 110, and electrons of the photosensitive dye are excited from the ground state to the excited state. The excited electrons are transferred to the conduction band of the semiconductor layer 113 via the electrical connection between the photosensitive dye and the semiconductor layer 113, pass through the semiconductor layer 113 and reach the photo-electrode 111 after being transferred, and are outputted to outside via the photo-electrode 111, so as to form a driving current for driving an external circuit.

The photosensitive dye may include molecules that absorb visual light, and cause rapid movement of electrons to the semiconductor layer 113 in an excited state due to light. The photosensitive dye may be in the form of a liquid, a gel that is partially solid, half-solid, or completely solid. For example, the photosensitive dye may be a ruthenium-based photosensitive dye.

The electrolyte 170 filling the photoelectric cell S may be an electrolyte including a redox couple. The electrolyte 170 may be a solid electrolyte, a gel electrolyte, and/or a liquid electrolyte.

The counter electrode 121 functions as the positive electrode of the dye-sensitized solar cell 100. The photosensitive dye absorbed by the semiconductor layer 113 absorbs light VL and is excited thereby, and excited electrons are extracted to outside via the photo-electrode 111. Also, the photosensitive dye, which lost electrons, is reduced so that it can receive electrons provided as the electrolyte 170 is oxidized. The oxidized electrolyte 170 is reduced by electrons, which reached the counter electrode 121 via an external circuit, and thus photoelectric transformation is completed.

Like the photo-electrode 111, the counter electrode 121 may also be formed of a TCO having both electric conductivity and light transparency. Furthermore, the counter electrode 121 may further contain a metal electrode formed of a metal with high electric conductivity, such as Ag, Au, Al, or the like.

The catalyst layer 123 may be formed on the counter electrode 121. The catalyst layer 123 may be formed of a material, which may function as a reduction catalyst to assist in the provision of electrons. For example, the catalyst layer 123 may be formed of a metal, such as platinum (Pt), Au, Ag, Al, or the like, a metal oxide, such as a tin oxide, and/or a carbon-based material, such as graphite.

The plurality of photoelectric cells S are electrically connected to each other via the connection members 180. The connection members 180 may be arranged within the housing spaces 181 defined by the inner sealing member 130 as shown in FIG. 2. The housing spaces 181 may be formed to penetrate the inner sealing member 130. The connection members 180 vertically extend (e.g., extend in a thickness direction of the photoelectric conversion module 100) to contact both the photo-electrodes 111 and the counter electrodes 121, which are respectively arranged above and below the connection members 180, and electrically connect the photo-electrodes 111 and the counter electrodes 121 between adjacent photoelectric cells S. FIG. 3 shows a state in which the connection members 180 connect the photoelectric cells S in series. The connection members 180 may be formed of a metallic material with high electric conductivity, e.g. a conductive paste.

Although a plurality of photoelectric cells S are formed in the present embodiment described above, the present invention is not limited thereto. For example, the dye-sensitized solar cell 100 having a single photoelectric cell S may be used as an independent device.

FIG. 4 is a perspective view showing arrangements of the inner sealing member 130 and the outer sealing member 150, and FIG. 5 is an exploded perspective view of the structure shown in FIG. 4. As shown in FIGS. 4 and 5, the inner sealing member 130 and the outer sealing member 150 are arranged between the first substrate 110 and the second substrate 120.

The inner sealing member 130 maintains the interval between the first substrate 110 and the second substrate 120 and defines the photoelectric cells S, which are arranged in a certain direction to be parallel to each other, simultaneously. Furthermore, the inner sealing member 130 surrounds and seals the electrolyte 170. A thermal hardening resin (e.g. an epoxy), a thermoplastic region (e.g. an ionomer), and/or a photopolymer (e.g. an UV hardening epoxy) may be used as the inner sealing member 130.

The outer sealing member 150 also maintains the interval between the first substrate 110 and the second substrate 120. A thermal hardening resin (e.g. an epoxy), a thermoplastic region (e.g. an ionomer), and/or a photopolymer (e.g. an UV hardening epoxy) may also be used as the outer sealing member 150.

In addition, the outer sealing member 150 provides (defines) a space to be filled by the fluid 140 between the inner sealing member 130 and the outer sealing member 150. To form the space, the outer sealing member 150 is arranged to be a set or predetermined distance apart from the inner sealing member 130. Here, the distance between the outer sealing member 150 and the inner sealing member 130 may be constant in all directions. In other words, the outer sealing member 150 is arranged such that a distance w1 between the lengthwise edges of the inner sealing member 130 and the outer sealing member 150 and a distance (instance) w2 between the widthwise edges of the inner sealing member 130 and the outer sealing member 150 are the same. Therefore, pressure applied by the fluid 140 to the outer walls of the inner sealing member 130 is constant regardless of directions. Since constant pressure is applied to the inner sealing member 130, the sealing structure of the dye-sensitized solar cell 100 for preventing (or protecting from) leakage of the electrolyte 170 may be stably maintained.

In addition, the pressure between the outer sealing member 150 and the inner sealing member 130 is set to be higher than the pressure inside the inner sealing member 130, that is, the internal pressure of the photoelectric cells S. For example, in the case of using a gas as the fluid 140, the gas is injected to have a pressure higher than the pressure inside the inner sealing member 130. Since the pressure of the fluid 140 outside the inner sealing member 130 is relatively higher, it may prevent (or block) the electrolyte 170 inside the inner sealing member 130 from leaking out.

In the case of using a liquid as the fluid 140, leakage of the electrolyte 170 may be prevented (or block) by reducing the difference between material concentrations of the fluid 140 and the electrolyte 170 inside the inner sealing member 130. To reduce the difference between material concentrations of the fluid 140 and the electrolyte 170 inside the inner sealing member 130, the material concentration of the fluid 140 may be set to be similar to or the same as that of the electrolyte 170. Examples of the liquids include a silicone oil, an electrolyte, an electrolyte solvent, or the like. Especially, in the case of using the electrolyte or the electrolyte solvent, the electrolyte or the electrolyte solvent having the same or substantially the same (identical or substantially identical) material concentration as the electrolyte 170 inside the inner sealing member 130 to reduce the gradient of material concentrations may be used. In the case of using the electrolyte as the fluid 140 and in one embodiment, the electrolyte used as the fluid 140 is similar to the electrolyte 170 for ion components, additives, and solvents, and thus the gradient of material concentrations is reduced or minimized. On the other hand, in the case of using the electrolyte solvent as the fluid 140 and in one embodiment, diffusion of solvent molecules of the electrolyte 170, the solvent molecules being the weakest molecules of the electrolyte 170, is effectively prevented, and the electrolyte solvent is relatively inexpensive as compared to the electrolyte stated above. Also, since the silicone oil exhibits characteristics of less material property variations in a wide range of temperatures from about 70°C to about 200°C and is water-proof, stability of the dye-sensitized solar cell 100 is improved according to one embodiment by using a silicone oil as the fluid 140. In one embodiment, the silicone oil also acts as a pollution repellent.

Although the overall size of the outer sealing member 150 is smaller than those of the first substrate 110 and the second substrate 120 in the present embodiment, the present embodiment is not limited thereto. For example, the outer sealing member 150 may have the same size as the first substrate 110 and the second substrate 120, and thus the dye-sensitized solar cell 100 may have a completely hexahedral shape.

As described above, according to one or more of the above embodiments of the present invention, a dye-sensitized solar cell may include not only an inner sealing member, but also an outer sealing member, and may be configured such that a fluid filling the space between the inner sealing member and the outer sealing member is used to apply a set or predetermined pressure to the inner sealing member, so that leakage of an electrolyte may be effectively prevented.

Furthermore, according to the one or more of the above embodiments of the present invention, a dye-sensitized solar cell may include not only an inner sealing member, but also an outer sealing member, and may be configured such that the gradient of material concentrations of a fluid filling the space between the inner sealing member and the outer sealing member and an electrolyte inside the inner sealing member is reduced or minimized, so that leakage of an electrolyte may be effectively prevented.

Therefore, in view of the forgoing, durability and reliability of a dye-sensitized solar cell may be improved.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A dye-sensitized solar cell (100) comprising:
one or more photoelectric cells (S);
a first substrate (110) and a second substrate (120), the first and second substrates facing each other;
an electrolyte (170) between the first substrate and the second substrate;
an inner sealing member (130) between the first substrate and the second substrates for sealing the electrolyte within the one or more photoelectric cells (S);
an outer sealing member (150) spaced apart from the inner sealing member and surrounding the inner sealing member; and
a fluid (140) between the inner sealing member and the outer sealing member.

2. The dye-sensitized solar cell of claim 1, wherein the fluid (140) is arranged to apply pressure to the inner sealing member, which is greater than the internal pressure within each of the one or more photoelectric cells.

3. The dye-sensitized solar cell of claim 1 or 2, wherein the fluid comprises a gas.

4. The dye-sensitized solar cell of claim 1 or 2, wherein the fluid comprises a liquid.

5. The dye-sensitized solar cell of claim 4, wherein the fluid has a concentration substantially identical to that of the electrolyte.

6. The dye-sensitized solar cell of claim 4, wherein the fluid comprises a silicone oil.

7. The dye-sensitized solar cell of claim 4, wherein the fluid comprises an electrolyte.

8. The dye-sensitized solar cell of claim 4, wherein the fluid comprises an electrolyte solvent.

9. The dye-sensitized solar cell of any one of the preceding claims, wherein the outer sealing member and the inner sealing member are uniformly spaced apart from one another.

10. The dye-sensitized solar cell of any one of the preceding claims, wherein the inner sealing member defines walls of the one or more photoelectric cells.

11. The dye-sensitized solar cell of any one of the preceding claims, comprising a plurality of photoelectric cells arranged in parallel.

12. The dye-sensitized solar cell of any one of the preceding claims, wherein each of the one or more photoelectric cells comprises:
a first electrode (111) and a second electrode (121) respectively arranged on the first substrate (110) and the second substrate (120); and
a semiconductor layer (113) on the first electrode,
the electrolyte (170) being between the semiconductor layer and the second electrode (121).
